# EUROPEAN PATENT APPLICATION

(11) **EP 1 974 965 A1**
(43) Date of publication of application: **01.10.2008**
(21) Application number: 07122753.2
(22) Date of filing: 10.12.2007
(51) Int. Cl.: B60G 17/015, B60G 17/016, B60G 17/08, F16F 9/46

(54) **System for controlling damping and roll and pitch body movements of a motor vehicle, having adjustable hydraulic actuators**

(30) Priority: 26.03.2007 EP 07425177
(71) Applicant: C.R.F. SOCIETÀ CONSORTILE PER AZIONI, 10043 Orbassano (TO) (IT)
(72) Inventor: Turco, Patrizio, 10043, Orbassano (Torino) (IT); Ieluzzi, Michele, 10043, Orbassano (Torino) (IT)
(74) Representative: Notaro, Giancarlo

(57) **Abstract**

A suspension system for motor vehicles comprises adjustable hydraulic shock-absorbers (4) of the type provided with a proportional solenoid valve (25) for the adjustment of the degree of damping. The fluid under pressure can be supplied to the shock-absorber by an external hydraulic circuit (36) or by the shock-absorber to the external hydraulic circuit, by means of a valve assembly (30). Said valve assembly and the aforesaid proportional solenoid valve are controlled simultaneously for the active government of the motions of roll and pitch of the motor vehicle.

## Description

The present invention relates to suspension systems for motor vehicles, of the type comprising a plurality of adjustable hydraulic shock-absorbers associated to respective wheels of the motor vehicle.

Already known are adjustable hydraulic shock-absorbers for motor vehicles of the type indicated in the preamble of Claim 1.

An adjustable hydraulic shock-absorber of the type specified above is, for example, described in the document No. US-A-5 503 258, as well as in the documents Nos. US-A-5 282 645 and US-A-5 062 658. Adjustable hydraulic shock-absorbers of the type referred to above have been used for some time now for providing suspension systems of the so-called "semi-active" type, in which the forces of damping of the relative movement between the body of the motor vehicle and the wheels are modulated in a predetermined way. The term "semi-active" refers to the fact that said systems operate without receiving energy from outside.

The purpose of the present invention is to modify the known systems of the type referred to above so as to provide also an active control of the suspension in regard to the movements of rolling (rotation about the longitudinal axis) and pitching (rotation about a transverse horizontal axis) of the motor vehicle.

A further purpose of the invention is to provide a system of the type referred to above that is relatively simple, of reduced overall dimensions, and that involves a low energy consumption.

The above and further purposes are achieved, according to the invention, by a system as defined in Claim 1.

In the system according to the invention, each hydraulic shock-absorber functions also as hydraulic actuator in so far as, in addition to being able to vary its damping action as a result of an intervention of the solenoid valve that sets the by-pass passage in communication with the accumulator, it is also able to operate at a pressure that can be adjusted through the introduction from outside or the extraction towards the outside of hydraulic fluid. By exploiting said characteristic, it is thus possible to obtain a continuous control of the movements of roll and pitch.

Further characteristics and advantages of the invention will emerge from the ensuing description of the invention with reference to the annexed plates of drawings, which are provided purely by way of nonlimiting example and in which:
- Figure 1 is a longitudinal cross-sectional view of a preferred embodiment of an adjustable hydraulic actuator, during its distension, forming part of the system according to the invention;
- Figure 2 illustrates the actuator of Figure 1 during shortening;

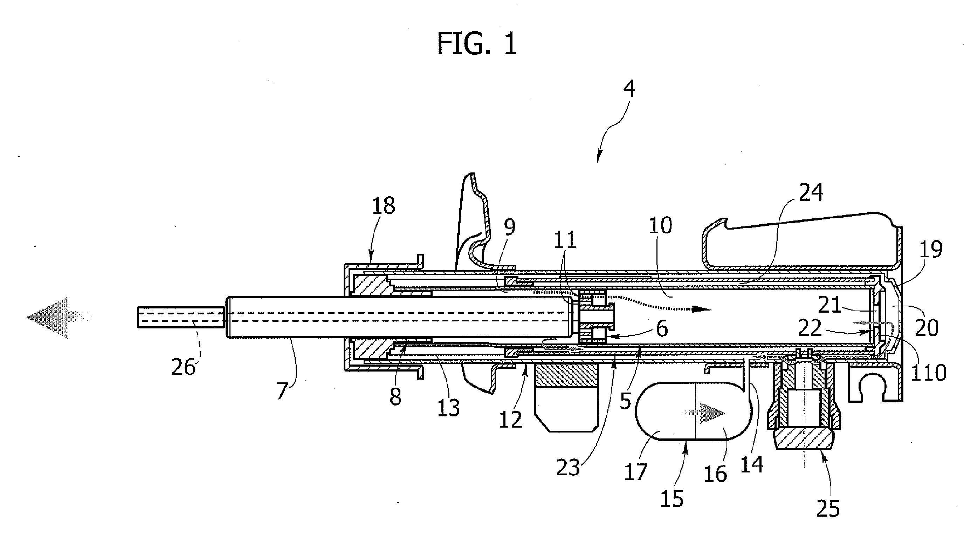

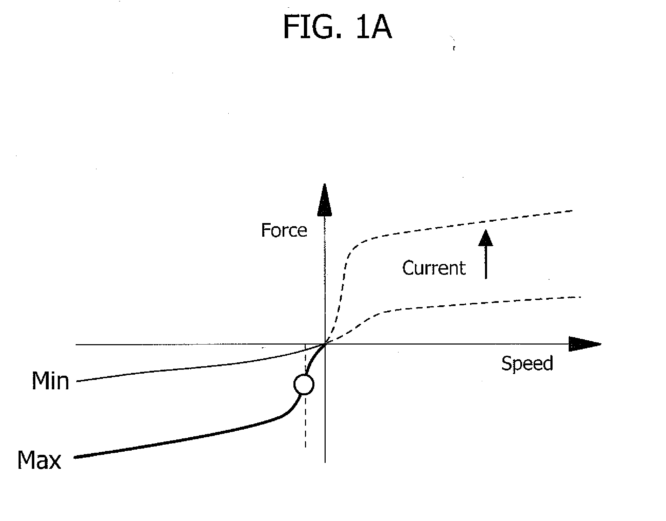

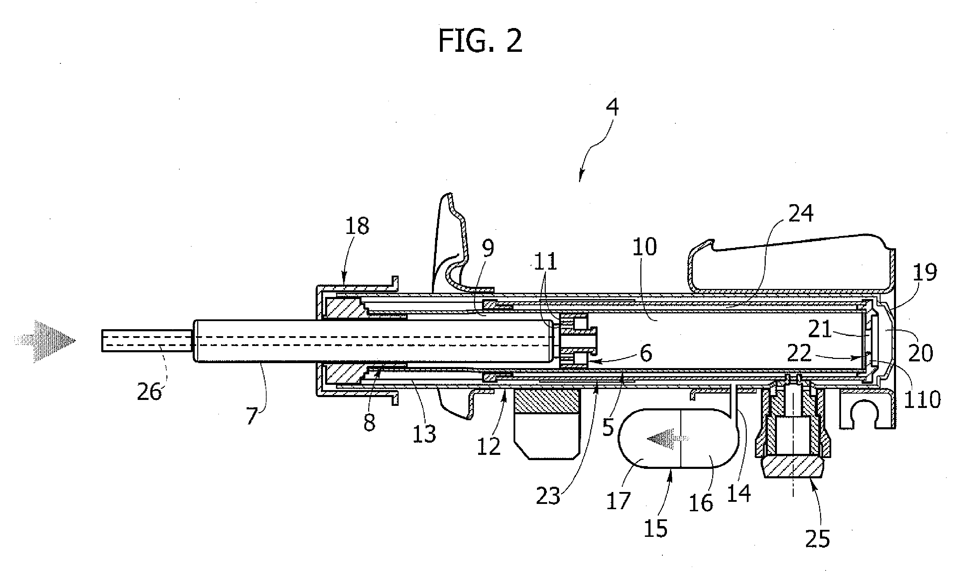

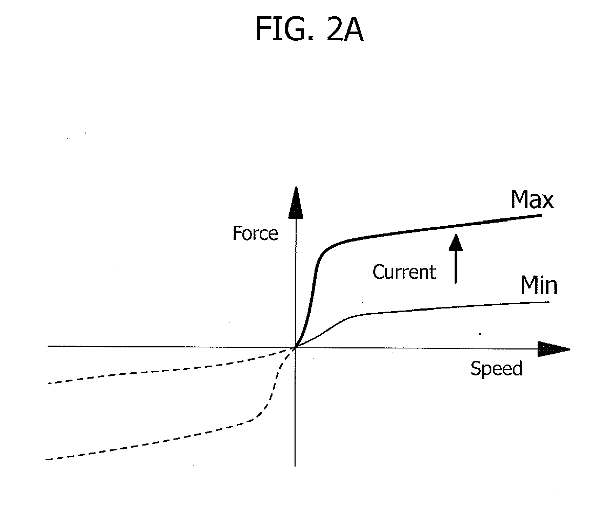

- Figures 1A, 2A are diagrams that illustrate the working ranges in the conditions of operation illustrated in Figures 1 and 2;

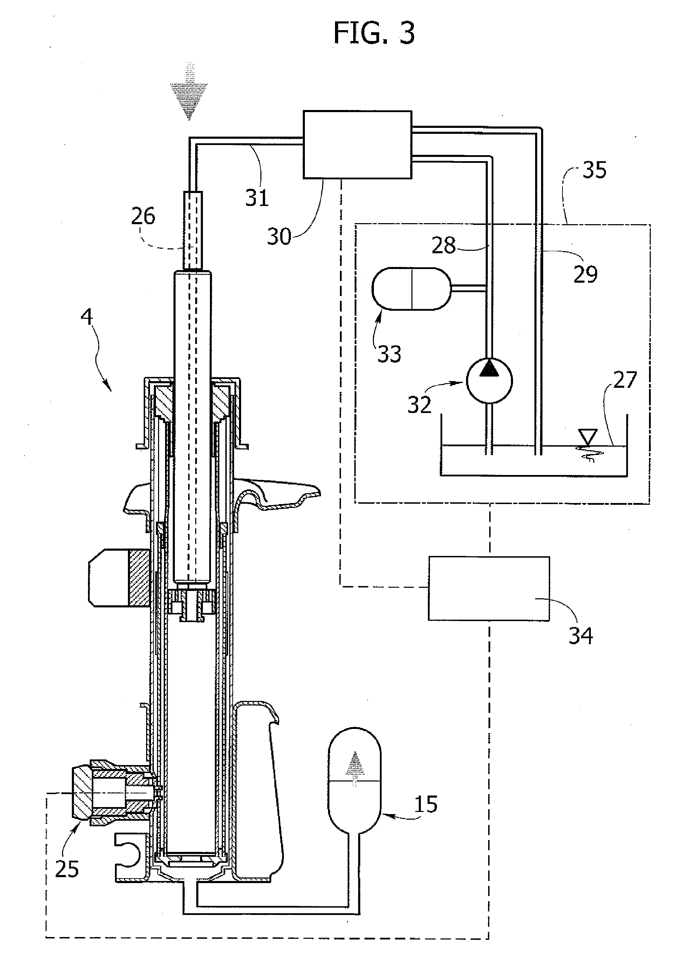

- Figure 3 is a schematic view of the system according to the invention;

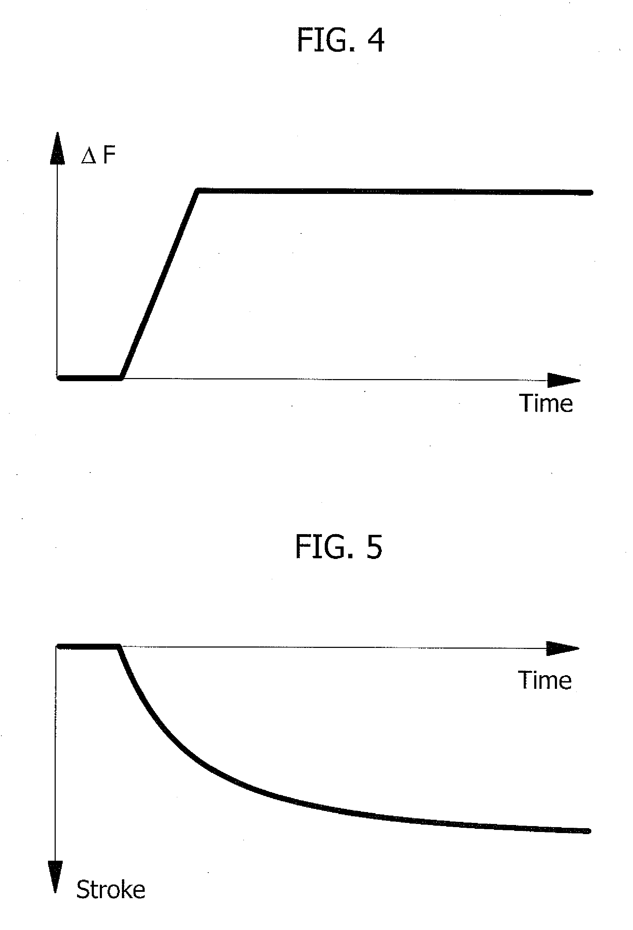

- Figures 4-7 are diagrams that illustrate the characteristics of operation of the system according to the invention;

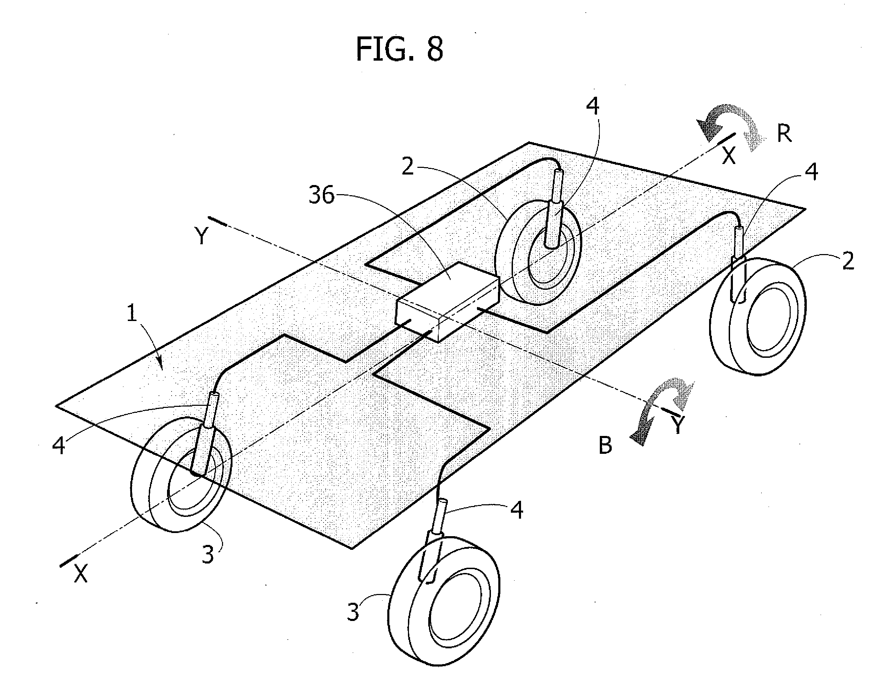

- Figure 8 is a schematic illustration of a motor vehicle equipped with a suspension system according to the invention;

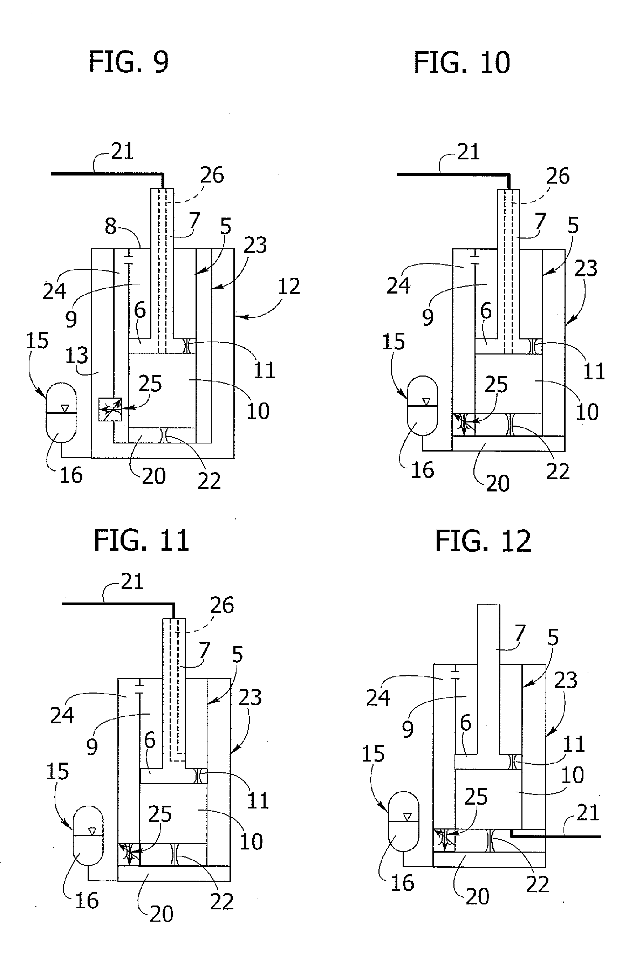

- Figure 9 is a schematic representation corresponding to the embodiment of Figures 1 and 2; and
- Figures 10-14 represent alternative schemes, which are also comprised in the present invention, where the outermost cylinder 12 of the embodiment of Figures 1 and 2 has been eliminated.

With reference to Figure 8, the reference number 1 designates as a whole the body of a motor vehicle, suspended with respect to the front wheels 2 and to the rear wheels 3 also by means of respective adjustable hydraulic actuators 4 forming part of the suspension system according to the invention and in hydraulic communication with a hydraulic circuit designated as a whole by the reference number 36, which will be illustrated in what follows.

With reference to Figures 1 and 2, each adjustable hydraulic actuator 4 comprises a first cylinder 5 containing a hydraulic fluid (oil). Slidably mounted within the first cylinder 5 is a piston 6 connected to a stem 7, which comes out of a first end 8 of the first cylinder 5. The piston 6 defines within the cylinder 5 a first chamber 9 adjacent to the first half 8 and containing the stem 7 and a second chamber 10, adjacent to the second end 110 of the first cylinder 5.

The chambers 9, 10 communicate with one another through a valve 11 provided in the piston 6.

The reference number 12 designates a second cylinder, coaxially surrounding both the first cylinder 5 and a third cylinder 23, set coaxially between the first and second cylinders. Defined between the second and third cylinders is a chamber 13 communicating through a pipe 14 with the chamber 16 of a hydro-pneumatic accumulator 15, which also has a chamber 17 filled with gas under pressure. The second cylinder 12 has one end 18, from which the stem 7 exits, and one closed end 19 facing the second end 110 of the first cylinder 5 and defining therewith a chamber 20 communicating with the chamber 13 and moreover communicating with the second chamber 10 of the first cylinder 6 via a passage 21 made in the second end 110 of the first cylinder 5, the passage 21 being controlled by a valve 22.

The chamber 13, which in traditional shock-absorbers assumes the function of reservoir, in this case only has the function of connecting the valve 22 and the valve 25 (described in what follows) with the accumulator 15.

Defined between the third cylinder 23 and the first cylinder 5 is a chamber having a tubular conformation, which constitutes a by-pass passage 24 that communicates with said first chamber 9 of the first cylinder 5 through passages (not illustrated) made in the wall of the first cylinder.

Finally, the reference number 25 designates as a whole a solenoid valve carried by the cylinder 12, which controls communication of said by-pass passage 24 with the chamber 13.

In the case of the embodiment illustrated, the solenoid valve 25 is of the proportional-control type, capable of varying the extent of the communication controlled thereby as the intensity of the electric current supplied thereto varies. In this way, the solenoid valve 25 is able to vary the extent of the communication controlled thereby from a minimum value (i.e., from a condition of minimum communication between the by-pass passage 24 and the chamber 13) to a maximum value, by means of a continuous regulation.

In the embodiment that is illustrated herein by way of example, made through the stem 7 and through the piston 11 is an axial passage 26 that sets the second chamber 10 of the first cylinder 5 in direct communication with a valve assembly 30 and a hydraulic supply circuit 35, which form part of an external hydraulic circuit 36 (Figures 3 and 8).

With reference to Figure 3, the supply circuit 35 comprises a discharge tank 27 connected with a delivery pipe 28 and a return pipe 29 that can be set selectively in communication, via a valve assembly 30, with a pipe 31 communicating with the passage 26 of a respective hydraulic actuator 4. Inserted in the delivery pipe 28 is a supply pump 32 of any known type. Also envisaged is the communication of the pipe 28 with a hydro-pneumatic accumulator 33. The valve assembly 30 can be of any known type suited to supplying the hydraulic fluid under pressure coming from the pump 32 into the actuator 4, or else to enabling discharge of hydraulic fluid from the actuator 4 to the tank 27. The valve assembly 30 includes at least one valve of the type with proportional-control solenoid and, together with the valve 25, is governed by an electronic control unit 34 also on the basis of signals coming from sensors indicating the conditions of operation of the suspension, for example sensors of relative travel between the wheels of the motor vehicle and the body. A valve assembly 30 is provided for each actuator in order to enable independent control thereof.

The external circuit 36 comprises the hydraulic supply circuit 35 and four valve assemblies 30, possibly set together in twos on each axle of the vehicle.

Operation of the system presented above is described in what follows.

When the communication between each actuator 4 and the circuit 35 is closed, each actuator operates as a traditional semi-active shock-absorber, in which the damping action is adjusted by control of the solenoid valve 25. In greater detail, during the step in which the stem 7 moves towards the inside of the cylinder 5, the fluid of the chamber under pressure 10 flows through the valve 11 of the piston 6 into the first chamber 9 and from this through the passages (not visible in Figure 1) into the by-pass passage 24. From the by-pass passage 24, the fluid reaches, through the solenoid valve 25, the chamber 13 and thence the accumulator 15. Above a given pressure value in the chamber 10, the fluid also flows directly into the chamber 13 through the valve 22 and the chamber 20 adjacent to the second end of the cylinder. From the chamber 13 the fluid finally reaches the accumulator 15. Obviously, by intervening on the solenoid valve 25, it is possible to vary the damping action between a minimum level (see line "MIN" in the diagram of Figure 1A, which shows the variation of the force as the speed of displacement of the stem 7 varies) and a maximum level (line "MAX" in Figure 1A).

During the step of extension, in which the stem 7 comes out of the cylinder, the fluid passes from the accumulator 15 to the chamber 13 and then to the chamber 10 through the passage 21, controlled by the valve 22. Furthermore, for a level of pressure in the chamber 9 higher than a given value, there is also a direct passage of fluid from the chamber 9 to the chamber 10 through the valve 11 of the piston 6. Furthermore, during the movement of exit of the stem, the fluid is pushed by the piston 11 so as to pass from the chamber 9 to the by-pass passage 24, through the passages (not illustrated) made in the wall of the first cylinder 5. The fluid in the by-pass passage 24 flows finally into the chamber 13 and then into the accumulator 15, passing through the valve 25, which again influences the degree of damping obtained between a minimum level and a maximum level (see Figure 2A).

So far then the operation of the device, when it is used as semi-active shock-absorber in order to adjust the damping action during the movements of the suspension. As already mentioned, however, the system according to the invention is also able to operate in an active way in order to control the movements of roll and pitch of the motor vehicle. With reference to Figure 8, by "roll" is meant an oscillation of the body 1 of the motor vehicle about a longitudinal axis X-X (arrows R) and by "pitch" is meant a rotation of the body 1 of the motor vehicle about a transverse horizontal axis Y-Y (arrows B). To obtain said result, the different actuators 4 associated to the wheels of the motor vehicle are each controlled in a predetermined way by means of the external hydraulic circuit 36.

As has been seen, for governing the damping force the system controls the valve 25 (dissipative part, hence with the minimum expenditure of energy), whilst the valve 30 remains substantially closed.

For active control of the motions of roll and pitch (and possibly of the vertical level of the body) the valves 25 and 30 are used simultaneously.

In this a way, during the step of buffering, the valve 25 will be traversed by the sum of the rate of flow into the actuator and of the flow due to the speed of movement of the stem 7, affording a synergistic effect in the transients during shortening of the actuator.

As already mentioned, each valve 30 is controlled in such a way that the respective actuator is supplied with an additional volume of fluid under pressure or is emptied of fluid under pressure.

With reference once again to Figure 2, which refers, for example, to the actuator 4, which, during rolling or pitching of the motor vehicle, undergoes shortening (movement of the stem 7 towards the inside of the cylinder), the axial passage 26 is supplied with fluid under pressure in such a way that there occurs an increase in the level of pressure in the chamber 10, with consequent increase in the force of contrast applied by the actuator. The additional quantity of fluid supplied also leads to an increase in the flowrate through the solenoid valve 25. The shock-absorber, which, instead, during rolling or pitching is in an extended condition (Figure 1), is connected to the external circuit in such a way that an amount of fluid exits from the chamber 10 through the axial passage 26 of the stem. In these conditions, the flowrate of fluid through the solenoid valve 25 remains substantially the same, and the reduction of the level of pressure in the chamber 10 leads to a reduction in the force of contrast.

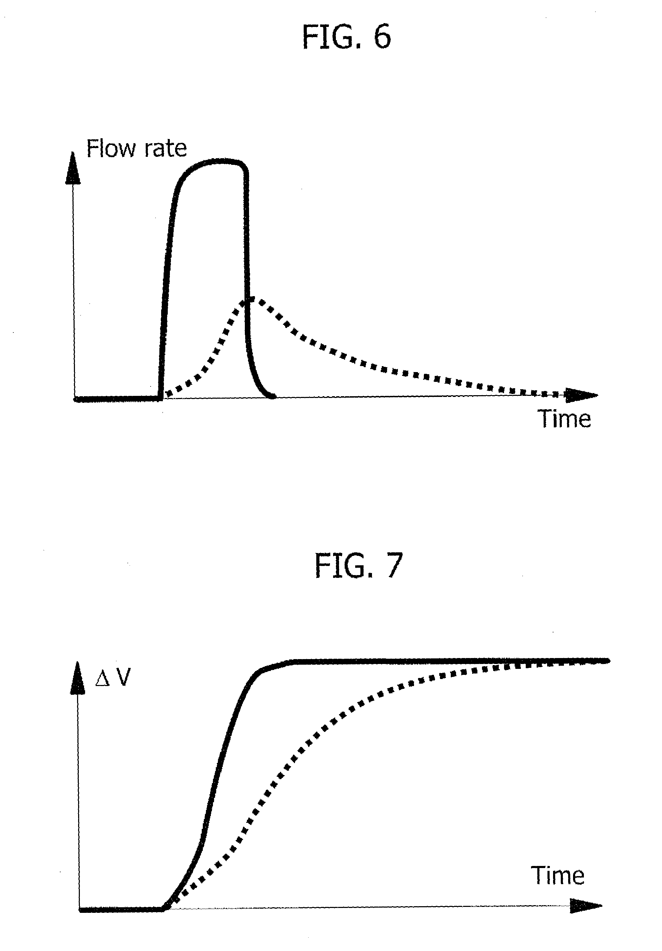

With reference once again to Figure 2, by choking the passage of the oil through the solenoid valve 25 there is a dilation of the times with which the oil is made to flow through the valve assembly 30 (Figure 3), which must always supply a predetermined volume of fluid, but over a longer time. There follows a significant reduction in the maximum value of the required flowrate, with consequent advantages in the sizing of the system (pump, pipes) and in the energy consumption for performing the active function for controlling the movements of roll and pitch. Figures 4 and 5 show the transfer of load to be compensated for versus time, and the stroke of the stem of the actuator versus time. The diagrams of Figures 6 and 7 show the plot of the flowrate in time and the variation of volume of oil entering the actuator in time. The dashed line corresponds to operation in the case where the synergy with the choking solenoid valve 25 is exploited. The solid line is the one that corresponds to operation in the condition in which the synergy between the solenoid valve 25 and the valve assembly 30 is not exploited. It is evident that the more marked the transient, the greater the benefit obtainable from said synergy.

The external circuit 35 can also be used, in static conditions, for varying the level of the motor vehicle.

As emerges clearly from the foregoing description, the main advantage of the invention lies in the fact that the functions of semi-active adjustment of damping and control of the body movements of roll and pitch of the vehicle are integrated in a single shock-absorber/actuator.

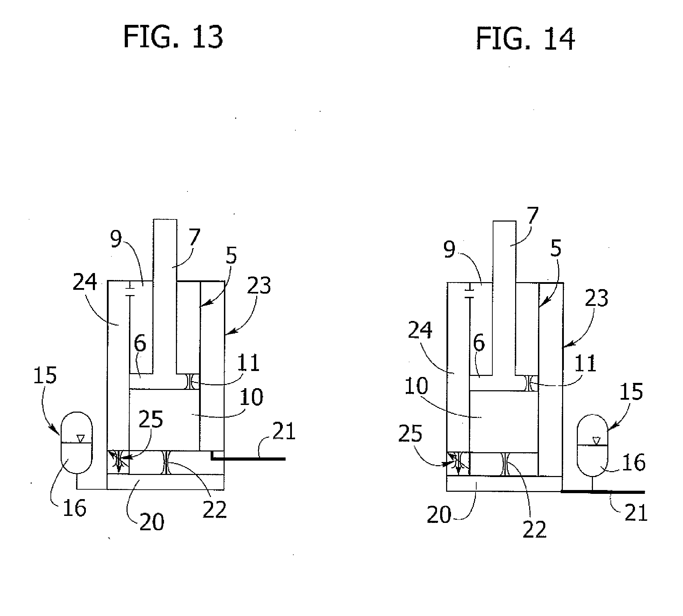

It should be noted that, even though the embodiment described in Figures 1 and 2 envisages an outer cylinder 12 for defining the auxiliary chamber of the hydraulic shock-absorber that communicates with the accumulator, said cylinder is not essential. Figure 9 of the annexed plates of drawings shows a scheme corresponding to the solution of Figures 1 and 2. Figure 10 shows the simplified version, with just two cylinders 5, 23, in which the auxiliary chamber 20 is defined at one end of the shock-absorber and communicates with the accumulator 15. Figure 11 differs from Figure 10 in that the passage 26 made in the stem 7 gives out into the chamber 9. Figures 12 and 13 refer to a solution in which the communication passage with the external hydraulic circuit 36 is not made in the stem 7, but rather in an end of the shock-absorber, and gives out, respectively, into the chamber 10 or else into the passage 24 communicating with the chamber 9. Finally, Figure 14 shows a solution in which the external hydraulic circuit 36 communicates directly with the accumulator 15, which is connected to a conduit 21 that sets in communication the chamber 20 with the external circuit 36. Of course, all the embodiments of Figures 9-14 can be obtained with the shock-absorber set upside down, i.e., with the stem projecting at the bottom of the body of the shock-absorber, which could prove useful for simplicity of installation. In the solutions of Figures 10-14 the valves 22 and 25 can be mounted in a manifold set on the outside of the shock-absorber, for example, for requirements of encumbrance or ease of installation.

Of course, without prejudice to the principle of the invention, the details of construction and the embodiments may vary widely with respect to what is described and illustrated herein purely by way of example, without thereby departing from the scope of the present invention.

## Claims

1. A suspension system for motor vehicles, comprising a plurality of adjustable hydraulic shock-absorbers (4), associated to the different wheels of the motor vehicle, in which each of said adjustable hydraulic shock-absorbers (4) comprises:
- a first cylinder (5), designed to contain a hydraulic fluid;
- a piston (6), slidably mounted within the first cylinder (5) and connected to a stem (7), which comes out of a first end (8) of the first cylinder (5) so as to define in the latter a first chamber (9) adjacent to said first end (8) and containing said stem (7);
- a second chamber (10) adjacent to the second end of the first cylinder (5), said first and second chambers (9, 10) being in communication with one another through a valve (11) provided in said piston (6);
- a second cylinder (12) coaxial with the first cylinder (5) and defining with it a by-pass passage (24) communicating with said first chamber (9) of the first cylinder (5);
- a valve (22) provided at said second end (110) of the first hydraulic cylinder (5) for setting in communication said second chamber (10) with an auxiliary chamber (20), which, in turn, communicates with an accumulator (15); and
- a proportional solenoid valve (25) for setting in communication in an adjustable way said by-pass passage (24) with said auxiliary chamber (13),
in which said valve (11) associated to the piston (6) and said valve (22) associated to the second end (110) of the first hydraulic cylinder (5) are passive valves, which are designed to operate in parallel with the proportional solenoid valve (25) for delimiting or regulating the maximum damping force in the steps of lengthening and shortening of the actuator,
said system being **characterized in that**:
- each adjustable hydraulic shock-absorber (4) is connected to an external hydraulic circuit (36) communicating with a chamber (9, 10, 24, 20) of said hydraulic shock-absorber (4), and **in that** said external hydraulic circuit (36) comprises control means (30) for feeding hydraulic fluid under pressure from a hydraulic supply circuit (35) to said hydraulic shock-absorber (4) and for discharging fluid under pressure from said hydraulic shock-absorber (4) to the hydraulic supply circuit (35) in such a way that said hydraulic shock-absorbers function also as hydraulic actuators for controlling in a continuous way the movements of roll and pitch of the motor vehicle; and
- said control means comprise an electronic control unit (34) pre-arranged for controlling in a coordinated way both a proportional-control valve assembly (30), which controls communication of said second chamber (10) of the hydraulic actuator with supply and discharge of said hydraulic supply circuit (35), and the aforesaid proportional solenoid valve (25) of each hydraulic actuator (4), in such a way that said proportional solenoid valve (25) and said valve assembly (30) are used simultaneously for active government of the motions of roll and pitch.

2. The suspension system according to Claim 1, **characterized in that** said auxiliary chamber (13) is defined by a third cylinder (12) surrounding the first and second cylinders (5, 23).

3. The suspension system according to Claim 1, **characterized in that** said auxiliary chamber (20) is defined by an end chamber (20) adjacent to said second end of the first cylinder (5).

4. The suspension system according to Claim 1, **characterized in that** said external hydraulic circuit (36) communicates with said first chamber (9) of said first cylinder (5).

5. The suspension system according to Claim 1, **characterized in that** said external hydraulic circuit (36) communicates with said second chamber (10) of said first cylinder (5).

6. The suspension system according to Claim 1, **characterized in that** said external hydraulic circuit (36) communicates with said by-pass passage (24) of said first cylinder (5).

7. The suspension system according to Claim 1, **characterized in that** said external hydraulic circuit (36) communicates directly with said accumulator (15), the accumulator being connected to a communication line between said auxiliary chamber (20) of the hydraulic shock-absorber and said external hydraulic circuit (36).

8. The suspension system according to Claim 1, **characterized in that** the communication with said external hydraulic circuit (36) comprises a passage made in the stem (7) of the hydraulic shock-absorber.

9. The suspension system according to Claim 1, **characterized in that** the communication with said external hydraulic circuit (36) comprises a passage made in one end of the hydraulic shock-absorber.

10. The suspension system according to Claim 1, **characterized in that** said proportional solenoid valve (25) and said valve (22) provided at said second end (110) of the first hydraulic cylinder (5) are mounted in a manifold set on the outside of the hydraulic shock-absorber.

11. The suspension system according to Claim 1, **characterized in that** said hydraulic shock-absorber is mounted with the stem (7) projecting at the top upwards.

12. The suspension system according to Claim 1, **characterized in that** said hydraulic shock-absorber is mounted with the stem (7) projecting at the bottom downwards.

13. The suspension system according to Claim 1, **characterized in that** said accumulator (15) is a spring accumulator.

14. The suspension system according to Claim 1, **characterized in that** said control means are also designed to control said actuators for adjusting the level of the motor vehicle.

15. System according to Claim 1, **characterized in that** associated to each hydraulic actuator (4) is a hydro-pneumatic accumulator (15) communicating with said auxiliary chamber (13, 20).

16. The suspension system according to Claim 1, **characterized in that** the external hydraulic circuit (36) communicates with said second chamber (10) of each adjustable hydraulic actuator (4) via an axial channel (26) made through said stem (7) and said piston (6) of the hydraulic actuator (4).

17. The suspension system according to Claim 1, **characterized in that** said control means are provided for controlling said solenoid valve (25) and said valve assembly (30) in such a way as to reduce the power peaks required of the system for governing the body movements, thus requiring lower flowrates of fluid to the supply circuit.

## Amended claims

### Amended claims in accordance with Rule 137(2) EPC.

**1.** A suspension system for motor vehicles, comprising a plurality of adjustable hydraulic shock-absorbers (4), associated to the different wheels of the motor vehicle, in which each of said adjustable hydraulic shock-absorbers (4) comprises:
- a first cylinder (5), designed to contain a hydraulic fluid;
- a piston (6), slidably mounted within the first cylinder (5) and connected to a stem (7), which comes out of a first end (8) of the first cylinder (5) so as to define in the latter a first chamber (9) adjacent to said first end (8) and containing said stem (7);
- a second chamber (10) adjacent to the second end of the first cylinder (5), said first and second chambers (9, 10) being in communication with one another through a valve (11) provided in said piston (6);
- a second cylinder (12) coaxial with the first cylinder (5) and defining with it a by-pass passage (24) communicating with said first chamber (9) of the first cylinder (5);
- a valve (22) provided at said second end (110) of the first hydraulic cylinder (5) for setting in communication said second chamber (10) with an auxiliary chamber (20), which, in turn, communicates with an accumulator (15); and
- a proportional solenoid valve (25) for setting in communication in an adjustable way said by-pass passage (24) with said auxiliary chamber (13),
**characterized in that** said valve (11) associated to the piston (6) and said valve (22) associated to the second end (110) of the first hydraulic cylinder (5) are passive valves, which are designed to operate in parallel with the proportional solenoid valve (25) for delimiting or regulating the maximum damping force in the steps of lengthening and shortening of the actuator, **and**
**in that**:
- each adjustable hydraulic shock-absorber (4) is connected to an external hydraulic circuit (36) communicating with a chamber (9, 10, 24, 20) of said hydraulic shock-absorber (4), and **in that** said external hydraulic circuit (36) comprises control means (30) for feeding hydraulic fluid under pressure from a hydraulic supply circuit (35) to said hydraulic shock-absorber (4) and for discharging fluid under pressure from said hydraulic shock-absorber (4) to the hydraulic supply circuit (35) in such a way that said hydraulic shock-absorbers function also as hydraulic actuators for controlling in a continuous way the movements of roll and pitch of the motor vehicle; and
- said control means comprise an electronic control unit (34) pre-arranged for controlling in a coordinated way both a proportional-control valve assembly (30), which controls communication of said second chamber (10) of the hydraulic actuator with supply and discharge of said hydraulic supply circuit (35), and the aforesaid proportional solenoid valve (25) of each hydraulic actuator (4), in such a way that said proportional solenoid valve (25) and said valve assembly (30) are used simultaneously for active government of the motions of roll and pitch.

**2.** The suspension system according to Claim 1, **characterized in that** said auxiliary chamber (13) is defined by a third cylinder (12) surrounding the first and second cylinders (5, 23).

**3.** The suspension system according to Claim 1, **characterized in that** said auxiliary chamber (20) is defined by an end chamber (20) adjacent to said second end of the first cylinder (5).

**4.** The suspension system according to Claim 1, **characterized in that** said external hydraulic circuit (36) communicates with said first chamber (9) of said first cylinder (5).

**5.** The suspension system according to Claim 1, **characterized in that** said external hydraulic circuit (36) communicates with said second chamber (10) of said first cylinder (5).

**6.** The suspension system according to Claim 1, **characterized in that** said external hydraulic circuit (36) communicates with said by-pass passage (24) of said first cylinder (5).

**7.** The suspension system according to Claim 1, **characterized in that** said external hydraulic circuit (36) communicates directly with said accumulator (15), the accumulator being connected to a communication line between said auxiliary chamber (20) of the hydraulic shock-absorber and said external hydraulic circuit (36).

**8.** The suspension system according to Claim 1, **characterized in that** the communication with said external hydraulic circuit (36) comprises a passage made in the stem (7) of the hydraulic shock-absorber.

**9.** The suspension system according to Claim 1, **characterized in that** the communication with said external hydraulic circuit (36) comprises a passage made in one end of the hydraulic shock-absorber.

**10.** The suspension system according to Claim 1, **characterized in that** said proportional solenoid valve (25) and said valve (22) provided at said second end (110) of the first hydraulic cylinder (5) are mounted in a manifold set on the outside of the hydraulic shock-absorber.

**11.** The suspension system according to Claim 1, **characterized in that** said hydraulic shock-absorber is mounted with the stem (7) projecting at the top upwards.

**12.** The suspension system according to Claim 1, **characterized in that** said hydraulic shock-absorber is mounted with the stem (7) projecting at the bottom downwards.

**13.** The suspension system according to Claim 1, **characterized in that** said accumulator (15) is a spring accumulator.

**14.** The suspension system according to Claim 1, **characterized in that** said control means are also designed to control said actuators for adjusting the level of the motor vehicle.

**15.** System according to Claim 1, **characterized in that** associated to each hydraulic actuator (4) is a hydro-pneumatic accumulator (15) communicating with said auxiliary chamber (13, 20).

**16.** The suspension system according to Claim 1, **characterized in that** the external hydraulic circuit (36) communicates with said second chamber (10) of each adjustable hydraulic actuator (4) via an axial channel (26) made through said stem (7) and said piston (6) of the hydraulic actuator (4).

**17.** The suspension system according to Claim 1, **characterized in that** said control means are provided for controlling said solenoid valve (25) and said valve assembly (30) in such a way as to reduce the power peaks required of the system for governing the body movements, thus requiring lower flowrates of fluid to the supply circuit.
